# EUROPÄISCHE PATENTANMELDUNG

(11) **EP 4 841 194 A2**
(43) Veröffentlichungstag der Anmeldung: **18.11.2026**
(21) Anmeldenummer: 26208450.2
(22) Anmeldetag: 23.05.2023
(51) Int. Cl.: F26B 13/00

(54) **BEHANDLUNGSANLAGE UND VERFAHREN ZUM BEHANDELN VON WERKSTÜCKEN UND/ODER MATERIALBAHNEN**

(30) Priorität: 24.05.2022 DE 102022113075
(62) Dokumentnummer(n) der früheren Anmeldung(en) nach Art. 76 EPÜ: 23729938.3 / 4 532 078
(71) Anmelder: Dürr Systems AG, 74321 Bietigheim-Bissingen (DE)
(72) Erfinder: Beeh, Bjorn, 71642 Ludwigsburg (DE); Chabo, Houver, 74081 Heilbronn (DE); Dieter, Heiko, 74354 Besigheim (DE)
(74) Vertreter: DTS Patent- und Rechtsanwälte PartmbB

(57) **Zusammenfassung**

Die vorliegende Erfindung betrifft eine Behandlungsanlage (100) zum Behandeln von Materialbahnen (166), insbesondere eine Trocknungsanlage (102) für Batterieelektroden-Bahnen (168), umfassend:
- einen Behandlungsraum (106), welcher mehrere Behandlungsraumabschnitte (108) umfasst, wobei vorzugsweise die Behandlungsraumabschnitte (108) auf eine erste Gruppe (170) und eine zweite Gruppe (172) aufgeteilt sind;
- eine Umluftzuführung (184) zur Zuführung eines Umluftstromes zu den Behandlungsraumabschnitten (108);
- eine Abluftführung (186) zur Abführung lösemittelhaltiger Abluft aus den Behandlungsraumabschnitten (108);
- eine Lösemittelrückgewinnungsvorrichtung (188), welcher ein Teil der lösemittelhaltigen Abluft zur Lösemittelrückgewinnung zuführbar ist, wobei lösemittelreduzierte Luft stromabwärts der Lösemittelrückgewinnungsvorrichtung (188) der Umluftzuführung (184) zuführbar ist; und
- eine Wärmespeicher- und Heizanlage (114) zum Speichern und Bereitstellen von Wärme,
wobei a) die Wärmespeicher- und Heizanlage (114) Wärme über einen zentralen Wärmeübertrager (222), welcher zur atmosphärischen Entkopplung des Behandlungsraums (106) von der Wärmespeicher- und Heizanlage (114) vorgesehen ist, auf einen anderen Teil der lösemittelhaltigen Abluft überträgt und aufgeheizte Abluft stromabwärts des zentralen Wärmeübertragers (222) über eine Heizgasführung (224) der Umluftzuführung (184) zuführbar ist, oder b) ein anderer Teil der lösemittelhaltigen Abluft direkt der Wärmespeicher- und Heizanlage (114) zuführbar ist und aufgeheizte Abluft stromabwärts der Wärmespeicher- und Heizanlage (114) über eine Heizgasführung (224) der Umluftzuführung (184) zuführbar ist.

Die vorliegende Erfindung betrifft ferner ein Verfahren zum Behandeln von Materialbahnen (166), insbesondere Batterieelektroden-Bahnen (168), in einer Behandlungsanlage (100).

## Beschreibung

Die vorliegende Erfindung betrifft eine Behandlungsanlage für Werkstücke und/oder Materialbahnen, insbesondere eine Trocknungsanlage für Fahrzeugkarosserien und/oder Batterieelektroden-Bahnen. Ferner betrifft die vorliegende Erfindung ein Verfahren zum Behandeln dieser Werkstücke und/oder dieser Materialbahnen.

Aktuell gibt es mehrere Verfahren in einer Behandlungsanlage, insbesondere einer Trocknungsanlage, die benötigte Wärmeenergie bereitzustellen.

Bei Anlagen ohne Abgasnachbehandlung, insbesondere ohne thermische Abgasreinigung (TAR), muss die Trocknungsanlage selbst mit Wärmeenergie versorgt werden, wofür in der Regel Gasbrennkammern in den Umluftaggregaten bzw. -modulen zum Einsatz kommen. Die der Trocknungsanlage zugeführte Frischluft muss in diesem Fall separat aufgeheizt werden.

Hingegen kann die Wärmeenergie aus dem gereinigten Abgas einer Anlage mit TAR genutzt werden, um über Wärmeübertrager die für die Trocknungsanlage benötigte Frischluft aufzuheizen.

Insbesondere im Bereich der Beschichtung im Rahmen der Lithium-Ionen-Batterie-Fertigung und den damit verbundenen Trocknungsprozessen kann die benötigte Wärmeenergiezufuhr mittels einer kleinen Brennkammer und der indirekten Beheizung der Zirkulationsluft erfolgen. Eine indirekte Beheizung mittels Dampf- oder Thermalöl-Wärmeübertrager sind weitere Möglichkeiten der Wärmebereitstellung. Eine direkte Beheizung der entsprechenden Abschnitte bzw. Zonen einer Behandlungsanlage mittels elektrischen Lufterhitzern ist ebenfalls möglich.

Die Elektrifizierung des Aufheizungsprozesses auf Grundlage von erneuerbaren Energiequellen stellt darüber hinaus eine Möglichkeit dar, den CO₂-Fußabdruck einer Lackiererei oder einer Beschichtungsanlage für Batterieelektroden für Lithium-Ionen-Batterien signifikant, d.h. um ca. 40 %, zu reduzieren. Im Falle einer Trocknungsanlage einer Lackiererei ließe sich der CO₂-Fußabdruck bei einer vollständigen Substitution des bisher eingesetzten Gases durch elektrische Energie aus erneuerbaren Energiequellen sogar um nahezu 100 % reduzieren.

Allerdings bedingt eine Elektrifizierung der entsprechenden Trocknungsanlage in der Lackiererei oder der Batterieelektroden-Beschichtung einen erheblich gesteigerten Bedarf an installierter elektrischer Leistung. Im Ergebnis erhöht sich die Netzanschlussleistung einer derartigen Lackiererei oder Batterieelektroden-Beschichtungsanlage an das Stromnetz erheblich, was sich entsprechend auf die Gebühren für den Netzanschluss auswirkt. Des Weiteren fallen zusätzliche Kosten für die elektrische Infrastruktur an, wie z.B. für Trafostationen, Verkabelungen, die erforderliche Regeltechnik etc.

In der Praxis sind zwei Strategien bekannt, um der Herausforderung eines gesteigerten Bedarfs an elektrischer Leistung beizukommen.

Die erste Strategie befasst sich mit dem Management von Spitzenstromverbräuchen u.a. bei elektrischen Trocknungsanlagen. Der Spitzenstromverbrauch, d.h. ein temporärer Maximalverbrauch, entsteht z.B. durch geforderte kurze Aufheizzeiten der gesamten Trocknungsanlage zum zügigen Erreichen ihres betriebsbereiten Zustands. Hierdurch erhöht sich die benötigte installierte Leistung der Trocknungsanlage sowie folglich die benötigte Netzanschlussleistung und damit verbundenen auch der fixe Kostenfaktor des Betriebs. Zudem sind hohe Stromverbräuche auch immer dann zu verzeichnen, wenn die Auslastung der Trocknungsanlage während des Betriebs aufgrund von Produktionsschwankungen, Pausenzeiten, etc. nicht konstant ist. Beispielsweise wird im Teillastbetrieb der Verbrauch allein schon aus betriebswirtschaftlichen Gesichtspunkten gedrosselt. In diesem Zustand wird die Trocknungsanlage in der Regel auf Betriebstemperatur gehalten. Eine Lasterhöhung tritt infolgedessen beim Anstieg der Produktion auf, d.h. beim Übergang zum Volllastbetrieb. Folglich muss zwischenzeitlich der Verbrauch stark erhöht werden, um das notwendige Niveau der Anlage zu erreichen, allerdings wird in diesem Fall maximal der vorherbestimmte Betriebspunkt angefahren und nicht bis zur Spitzenlast hochgeregelt, wie es z.B. im Anfahrbetrieb erforderlich ist.

Es ist bekannt, dass beim Aufheizen der Anlage kurzzeitig hohe Energiemengen benötigt werden, was bei rein elektrischer Beheizung einer Behandlungsanlage bzw. Trocknungsanlage hohe Anschlussleistungen der elektrischen Heizelemente erfordert. Um beispielsweise eine Trocknungsanlage in ein bis zwei Stunden auf die gewünschte Betriebstemperatur für den Produktionsstart zu bringen, werden Leistungen im einstelligen Megawatt-Bereich pro Anlage benötigt. Allerdings kann der Produktionsbetrieb selbst ebenso bereits Leistungen im einstelligen Megawatt-Bereich erfordern, weshalb der immense Bedarf beim kurzzeitigen Anfahren anstatt als absoluter Betrag eventuell besser dadurch begreifbar ist, wenn man sich vor Augen führt, dass die notwendige installierte Leistung eines solchen Start- bzw. Anfahrvorgangs das Eineinhalbfache bis maximal Dreifache der Leistung des Produktionsbetriebs notwendig macht. Somit sind die Anlagen zur Bewältigung von Spitzenlastphasen überzudimensionieren.

Wird mit einem thermischen Speichersystem Energie in Form von Wärme gepuffert, können Spitzenverbräuche gesenkt werden, indem Wärme in Phasen mit erhöhtem Wärmebedarf ausgespeichert bzw. bereitgestellt wird, während in Phasen mit geringer Last Wärme eingespeichert wird. Eine Dimensionierung des Speichers erfolgt anhand der zugrunde gelegten Betriebsstrategien und Rahmenbedingungen wie Anfahrzeiten, Betriebsstunden pro Tag oder Woche (insbesondere in Hinblick auf eine Nutzung der Anlage im Mehrschichtbetrieb), Pausenzeiten, durchschnittliche Auslastung der Trocknungsanlage etc.

Die Frage der Wirtschaftlichkeit eines Wärmespeichers bzw. dessen Implementierung wird bei dieser Strategie u.a. getrieben durch mögliche Einsparungen an Netzentgelt und Investitionen, wie z.B. aufgrund der benötigten Heizleistung, der Verkabelung, der Transformatorkapazitäten etc., sowie den zusätzlichen Investitionskosten für den geeignete Wärmespeicher.

Die zweite Strategie befasst sich mit der Erhöhung der Flexibilität in Bezug auf Strombeschaffung, auch "Smart Sourcing" genannt, wobei verstanden werden soll, dass die erste und die zweite Strategie nicht streng getrennt voneinander zur Anwendung kommen oder kommen sollen, sondern ineinandergreifen und sich ergänzen können, um einen optimalen Verbrauch an elektrischer Energie zu ermöglichen.

Der Ausbau erneuerbarer Energien führte zuletzt zu einer stark fluktuierenden Energieerzeugung, was sich u.a. auch in der Entwicklung der Strompreise bezogen auf den Tagesverlauf widerspiegelte. Weiterer Zubau erneuerbarer Energien und Wegfall planbarer Erzeugungskapazitäten werden diesen Trend zunächst weiter verstärken. Dies bietet die Möglichkeit bzw. macht es erforderlich, durch geschicktes Timing in der Strombeschaffung erhebliche Kostenvorteile im Betrieb zu erzielen.

Ziel der zweiten Strategie ist nicht in erster Linie die Netzanschlussleistung zu reduzieren, sondern Zeiten mit geringen Strompreisen, beispielsweise aufgrund hoher, potentiell überschüssiger Stromerzeugung oder geringer Nachfrage, zum Einspeichern von Wärmeenergie zu nutzen.

Vorteile durch derartige Speicherkonzepte liegen nicht nur beim Betreiber der Lackiererei und der Beschichtungsanlage für Batterieelektroden. Auch Stromnetzbetreiber setzen zur Netzstabilisierung und zum Ausgleich von Erzeugung und Verbrauch auf Kooperationen mit großen industriellen Abnehmern, welche bei Bedarf (aus Sicht des Netzbetriebs) Speicher befüllen können. Hierfür werden finanzielle Anreize die Verbrauchspreise und Netzanschlussgebühren betreffend gewährt, wobei Form und Art wechselseitiger Vorteile potentiell flexibel verhandelbar sind.

Des Weiteren wird der weitere Zubau erneuerbarer Energien zukünftig die Fluktuation der Stromerzeugung und damit auch des Strombörsenpreises weiter verstärken. Tatsächlich können/werden auch Phasen negativer Strompreise weiter zunehmen, so dass sogar durch Energiespeicher selbst Einnahmen generiert werden können. Speichergröße und Speicherzyklenanzahl sind diesbezüglich die wesentlichen Treiber für die Erwirtschaftung eines positiven Ertrags.

Demgegenüber stehen Investitionskosten für den Wärmeenergiespeicher. Wärmespeichergröße und integrierte Heizleistung sind daher individuell auf den Anwendungsfall abzustimmen. Im Idealfall werden Wärmespeicher über den Tagesbetrieb mehrmals befüllt und entleert, was jedoch auch abhängig von der Betriebsstrategie z.B. einer Lackiererei oder einer Batterieelektroden-Beschichtungsanlage ist (Anzahl der Schichten, Pausenzeiten etc.). Eine höhere Anzahl von Be- und Entladezyklen erhöht dabei die Wirtschaftlichkeit der eingesetzten Wärmespeicher.

Der vorliegenden Erfindung liegt daher die Aufgabe zugrunde, eine Behandlungsanlage, insbesondere eine Trocknungsanlage, für Werkstücke, insbesondere für Fahrzeugkarosserien, der eingangs genannten Art zu schaffen, welche Wärmeenergie ein- und ausspeichert, um den Leistungsbedarf, insbesondere den elektrischen Leistungsbedarf, zu reduzieren oder zumindest zeitlich zu strecken und/oder verschieben.

Diese Aufgabe wird erfindungsgemäß durch eine Behandlungsanlage zum Behandeln von Materialbahnen, insbesondere eine Trocknungsanlage für Batterieelektroden-Bahnen, mit den Merkmalen gemäß dem unabhängigen Anspruch 1 gelöst.

Es kann vorgesehen sein, dass eine Behandlungsanlage zum Behandeln von Werkstücken und/oder Materialbahnen, insbesondere eine Trocknungsanlage für Fahrzeugkarosserien und/oder Batterieelektroden-Bahnen, Folgendes umfasst:
- einen Behandlungsraum, welcher mehrere Behandlungsraumabschnitte umfasst, die jeweils einem von mehreren separaten Umluftmodulen der Behandlungsanlage zugeordnet sind,
- eine Wärmespeicher- und Heizanlage zum Speichern und Bereitstellen von Wärme,
- mindestens eine Heizgasführung, welche mindestens eine Heizgaszuführung und mindestens eine Heizgasrückführung umfasst.

Optional kann zudem eine Abluft- und/oder Abgasbehandlungsanlage zum Behandeln, insbesondere zur Reinigung, von mindestens einem Teil von im Behandlungsraum erzeugter Abluft- und/oder Abgas vorgesehen sein, wobei die Abluft- und/oder Abgasbehandlungsanlage vorzugsweise eine Abgasreinigungsanlage ist, mittels welcher a) eine thermische und/oder katalytische oxidative Lösemittelumsetzung, und/oder b) eine Lösemittel abtrennende Reinigung durchführbar ist.

Es ist in einer ersten Alternative a) über die Heizgaszuführung Heizgas von der Wärmespeicher- und Heizanlage zu den Umluftmodulen zuführbar und/oder über die Heizgasrückführung Heizgas von den Behandlungsraumabschnitten zu der Wärmespeicher- und Heizanlage rückführbar.

Bei dieser Variante wird der Wärmespeicher direkt in den Heizgaskreislauf zwischen den Umluftmodulen und den Behandlungsraumabschnitten der Behandlungsanlage eingebunden. Das Heizgas wird also direkt in den Umluftkreislauf der einzelnen Abschnitte eingebunden.

In einer zweiten Alternative b) umfasst die Behandlungsanlage einen zentralen Wärmeübertrager zur atmosphärischen Entkopplung des Behandlungsraums von der Wärmespeicher- und Heizanlage, welcher zwischen der mit den Umluftmodulen verbundenen Heizgaszuführung und der mit den Behandlungsraumabschnitten verbundenen Heizgasrückführung angeordnet ist und mittels welchem in der Wärmespeicher- und Heizanlage erzeugte Wärme auf das in der Heizgasführung geführte Heizgas übertragbar ist.

Bei dieser Variante wird der Wärmespeicher als Wärmequelle über einen Wärmeübertrager eingebunden, welcher den Speicherkreislauf der Wärmespeicher- und Heizanlage und die Heizgasführung der Behandlungsanlage atmosphärisch voneinander trennt. Die atmosphärische Trennung ermöglicht hohe Wärmespeichertemperaturen und somit eine hohe Energiedichte. Zudem werden mögliche Verschmutzungen im Speicherbett der Wärmespeicher ebenso ausgeschlossen wie potentielle, unerwünschte Reaktionen der rückgeführten Lösemittelatmosphäre. Des Weiteren erlaubt insbesondere diese Variante eine spätere Umrüstung bzw. Nachrüstung des Wärmespeichers, um mögliche neuere Speichertechnologien und/oder zusätzliche Kapazitäten und/oder Anpassungen zu integrieren.

In einer dritten Alternative c) umfasst jedes Umluftmodul einen Wärmeübertrager zur atmosphärischen Entkopplung des jeweiligen Behandlungsraumabschnitts von der Wärmespeicher- und Heizanlage, mittels welchen in der Wärmespeicher- und Heizanlage erzeugte Wärme auf in den Behandlungsraumabschnitten zirkulierte Heizgase übertragbar ist.

In dieser Variante wird der Wärmespeicher direkt mit einer Reinheizgasführung mit dem Behandlungsraum verbunden. Der Wärmestrom des Speichers wird durch klassische Umluftmodule mit jeweils eigenem Wärmeübertrager geführt. Hierdurch wird ebenfalls eine atmosphärische Trennung vom Wärmestrom der Wärmespeicher- und Heizanlage und den Umluftströmen zwischen den Umluftmodulen und den Behandlungsraumabschnitten erreicht. Im Gegensatz zu einer klassischen reingasbeheizten Trocknungsanlage wird der Wärmestrom der Wärmespeicher- und Heizanlage in einem Kreislauf gefahren, was eine Rückführung zur Wärmespeicher- und Heizanlage erfordert. Aufgrund der strukturellen Nähe zum klassischen TAR-Aufbau einer Trocknungsanlage wird diese Variante auch als Möglichkeit gesehen TAR-Bestandstrocknungsanlagen mit einer erfindungsgemäßen Wärmespeicher- und Heizanlage auszurüsten.

Es ist gegebenenfalls sinnvoll eine Temperaturregelstrecke zwischen Heizgaszuführung und -abführung bei dieser Variante zu installieren, welche die exakte Einstellung der Heizgastemperatur erleichtert.

Die Reinigung der Abgase bzw. der Abluft der Behandlungsraumabschnitte des Behandlungsraums erfolgt beispielsweise durch eine regenerative thermische Oxidation (RTO) in der thermischen Abgasreinigungsanlage, vorzugsweise durch eine ebenfalls elektrisch versorgte, flammenlose RTO (FRTO), welche weiter vorzugsweise zur Effizienzsteigerung des Gesamtsystems einen Frischluftwärmeübertrager nachgeschaltet haben kann, der die zugeführte Frischluft vorwärmt.

Aufgrund des geringen Temperaturniveaus der Abluft am Ausgang der RTO ist es in allen Varianten von Vorteil, wenn ein weiterer Wärmeübertrager zur Frischlufterwärmung vorgesehen ist, der zusätzliche Wärme aus dem Kreislauf der Wärmespeicher- und Heizanlage auf die vorgewärmte Frischluft überträgt.

Es ist ferner vorgesehen, dass die Wärmespeicher- und Heizanlage mindestens eine elektrische Heizvorrichtung zum Heizen eines Heizgases, mindestens eine Mischvorrichtung und mindestens eine Wärmespeichereinheit umfasst.

Das Zwischenpuffern der Wärmeenergie im Wärmespeicher, d.h. in der mindestens einen Wärmespeichereinheit, der Wärmespeicher- und Heizanlage erfolgt vorzugsweise durch ein Einspeichern der Wärme während des Wochenendes oder während der Produktionspausen. Somit kann die gespeicherte Wärmeenergie parallel zu von der elektrischen Heizvorrichtung bereitgestellte bzw. erzeugte Wärme abgerufen werden, wenn die Behandlungsanlage auf Betriebstemperatur aufgeheizt werden muss bzw. wenn bei Produktionsspitzen mehr Wärmeenergie benötigt wird.

Umfasst der Wärmespeicher mehrere Wärmespeichereinheiten, ist es vorteilhaft, wenn Wärmespeichereinheiten einzeln mit Wärme be- oder entladbar sind.

Die zusätzliche Bereitstellung von Wärmeenergie aus dem Wärmespeicher bzw. der mindestens einen Wärmespeichereinheit ermöglicht in vorteilhafter Weise die Realisierung schnellerer Aufheizraten im Vergleich zu einer Anlage, welche nur über eine elektrische Heizvorrichtung verfügt. Durch den Wärmespeicher kann ferner die installierte Leistung der elektrischen Heizvorrichtung reduziert werden und somit die benötigte Anschlussleistung der Behandlungsanlage. Ferner ermöglicht die erfindungsgemäße Wärmespeicher- und Heizanlage eine Erhöhung der Flexibilität in der Strombeschaffung, womit tageszeitabhängige Strompreisschwankungen ausgenutzt werden können.

Außerdem kann vorgesehen sein, dass die Mischvorrichtung stromabwärts der elektrischen Heizvorrichtung angeordnet ist.

Dadurch lässt sich das in der elektrischen Heizvorrichtung aufgeheizte Heizgas entsprechend des Betriebsmodus der Wärmespeicher- und Heizanlage zumindest in Richtung des Behandlungsraums, in Richtung der Wärmespeichereinheiten oder in Richtung des Behandlungsraums unter Zumischung der in den Wärmespeichereinheiten gespeicherten Wärme leiten

Bei einer Ausgestaltung der Erfindung ist vorgesehen, dass die Mischvorrichtung mit der mindestens einen Wärmespeichereinheit verbunden ist.

Es ist vorteilhaft, wenn über die der elektrischen Heizvorrichtung nachgeordnete, d.h. stromabwärts angeordnete, Mischvorrichtung wahlweise Wärmeenergie in die mindestens eine Wärmespeichereinheit eingespeichert werden kann.

Bei einer weiteren Ausgestaltung der Erfindung ist vorgesehen, dass die Mischvorrichtung so eingerichtet ist, dass in der elektrischen Heizvorrichtung erhitztes Heizgas
- dem Behandlungsraum zuführbar ist, oder
- dem mindestens einen Wärmespeicher zur Speicherung mindestens eines Teils der in dem Heizgas enthaltenen Wärme zuführbar ist,
- oder dem Behandlungsraum unter Zumischung mindestens eines Teils der in dem mindestens einen Wärmespeicher gespeicherten Wärme zuführbar ist.

Somit weist die Mischvorrichtung vorteilhafterweise mindestens drei Schaltstellung auf, über welche vorzugsweise der Heizgasstrom gelenkt werden kann.

Es ist ferner vorgesehen, dass stromaufwärts der elektrischen Heizeinrichtung ein Verdichter angeordnet ist.

Durch den Verdichter, der vorzugsweise ein motorgetriebenes Gebläse umfasst, wird die der Wärmespeicher- und Heizanlage zugeführte Frischluft der elektrischen Heizvorrichtung zugefördert, um diese dann zu erhitzen.

In einer weiteren Ausgestaltung der Erfindung ist vorgesehen, dass stromabwärts des Behandlungsraums ein weiterer Verdichter angeordnet ist.

Der weitere Verdichter, der ebenfalls vorzugsweise ein motorgetriebenes Gebläse umfasst, wird der aus dem Behandlungsraum zurückgeführte Gasstrom zurück in Richtung der elektrischen Heizvorrichtung gefördert, um dort erneut erhitzt zu werden.

In einer Ausgestaltung der Erfindung ist vorgesehen, dass stromabwärts der Mischvorrichtung ein steuer- oder regelbares Ventil angeordnet ist.

Über ein derartiges Ventil lässt sich in vorteilhafter Weise der zum Behandlungsraum geführte Gasstrom steuern und/oder regeln.

In einer weiteren Ausgestaltung der Erfindung ist vorgesehen, dass die Behandlungsanlage eine Frischluftzuführung umfasst, mittels welcher Frischluft einer Einlassschleuse und/oder Auslassschleuse des Behandlungsraums zuführbar ist.

Dadurch dass die Frischluft der Einlassschleuse und/oder Auslassschleuse zugeführt wird, bilden sich an der Einlassschleuse und/oder Auslassschleuse des Behandlungsraums Strömungswirbel aus, welche vorzugsweise verhindern, dass das in den Behandlungsraumabschnitten zirkulierte Heizgas aus dem Behandlungsraum austritt, da dieses beispielsweise während der Behandlung, wie z.B. der Trocknung von lackierten Fahrzeugkarosserien, Lösemittel aufnimmt.

In einer weiteren Ausgestaltung der Erfindung ist vorgesehen, dass die Behandlungsanlage einen Frischluftwärmeübertrager umfasst, mittels welchem in der Abluft- und/oder Abgasbehandlungsanlage, insbesondere der thermischen Abgasreinigungsanlage, erzeugte Wärme auf die Frischluft der Frischluftzuführung übertragbar ist.

In einer weiteren Ausgestaltung der Erfindung ist vorgesehen, dass die Behandlungsanlage einen weiteren Frischluftwärmeübertrager umfasst, mittels welchem in der Wärmespeicher- und Heizanlage erzeugte Wärme auf die Frischluft der Frischluftzuführung übertragbar ist.

Durch beide im Strömungspfad der zugeführten Frischluft angeordneten Frischluftwärmeübertrager wird erreicht, dass die Frischluft vorgewärmt bzw. erwärmt wird, so dass es im Bereich der Einlassschleuse und/oder Auslassschleuse nicht zur Kondensatbildung kommt, welche ein Qualitätsrisiko für die behandelten Werkstücke darstellt.

In einer weiteren Ausgestaltung der Erfindung ist vorgesehen, dass die Behandlungsraumabschnitte entlang einer Förderrichtung der Werkstücke nacheinander angeordnet sind.

Vorzugsweise werden die Werkstücke über die Einlassschleuse in den Behandlungsraum eingebracht und werden dann gemäß der vorbestimmten Behandlung in den einzelnen Behandlungsraumabschnitten behandelt, wobei vorstellbar ist, dass auch einzelne Behandlungsraumabschnitte ausgelassen werden können, d.h. das betroffene Werkstück wird durch den entsprechenden Behandlungsraumabschnitt lediglich hindurchgefördert, sofern die dort eingerüstete Behandlung nicht Teil der Gesamtbehandlung des betroffenen Werkstücks ist.

Das behandelte Werkstück verlässt den Behandlungsraum vorzugsweise über die Auslassschleuse.

In einer weiteren Ausgestaltung der Erfindung ist vorgesehen, dass die Behandlungsanlage mindestens einen Nachbehandlungsraum umfasst, welcher mindestens einen Nachbehandlungsraumabschnitt umfasst, dem Kaltgas, insbesondere Frischluft, zuführbar ist.

In dem Nachbehandlungsraum, welcher sich vorzugsweise, bezogen auf die Förderrichtung des Behandlungsraums, an den Behandlungsraum anschließt, wird vorzugsweise keine weitere Wärme zugeführt.

Der Nachbehandlungsraum, in welchem insbesondere lackierte Werkstücke wie Fahrzeugkarosserien behandelt werden, wird bevorzugt von zugeführter Frischluft durchströmt, um die behandelten Werkstücke sukzessive auf eine Umgebungstemperatur zu bringen.

Es ist ferner vorgesehen, dass die thermische Abgasreinigungsanlage einen Gasbrenner und/oder eine elektrisch betriebene Heizvorrichtung und/oder eine Gasturbine, insbesondere eine Mikrogasturbine, umfasst.

Die Aufgabe wird erfindungsgemäß weiter durch ein Verfahren zum Behandeln von Materialbahnen mit den Merkmalen gemäß dem unabhängigen Verfahrensanspruch gelöst.

Es kann vorgesehen sein, dass ein Verfahren zum Behandeln von Werkstücken und/oder Materialbahnen folgende Schritte umfasst:
Durchströmen von mehreren Behandlungsraumabschnitten eines Behandlungsraums einer Behandlungsanlage mit mehreren in separaten Kreisläufen geführten Gasströmen; direktes oder indirektes Erhitzen der Gasströme mittels eines in einer Wärmespeicher- und Heizanlage der Behandlungsanlage erzeugten Heizgasstroms.

In einer Ausgestaltung des erfindungsgemäßen Verfahrens ist vorgesehen, dass dem Heizgasstrom Wärme von einer elektrischen Heizeinrichtung der Wärmespeicher- und Heizanlage oder Wärme von der elektrischen Heizeinrichtung und mindestens einer Wärmespeichereinheit der Wärmespeicher- und Heizanlage zugeführt wird.

Günstig kann es sein, wenn die Behandlungsanlage, insbesondere eine oder mehrere oder sämtliche elektrisch betriebenen Heizeinrichtungen und/oder eine Aufbereitungsvorrichtung, mit einer Mittelspannung von mindestens ungefähr 3 kV und/oder höchstens ungefähr 8 kV, insbesondere 4.160 V bis 6.600 V, versorgbar ist.

Vorzugsweise können alle elektrisch betriebenen Heizkomponenten der Umluftanlage bzw. der Behandlungsanlage, wie u.a. die vorzugsweise elektrisch betriebenen Heizeinrichtungen, mit einer Mittelspannung von beispielsweise mindestens ungefähr 3 kV und/oder höchstens ungefähr 8 kV, insbesondere 4.160 V bis 6.600 V, statt der üblichen 400 V versorgt werden. Das kann zwar besondere Heizelemente mit entsprechenden Mehrkosten erfordern, bietet jedoch vorzugsweise in der Peripherie, d.h. bzgl. der Anschlüsse, Kabel, etc., große Einsparpotentiale. Außerdem ist ein wesentlich geringerer Faktor der Spannungstransformation aus dem Versorgungsnetz notwendig, was u.a. die Trafostation zugunsten geringerer Investitionskosten verkleinert und Platz spart. Der Anschluss an eine elektrisch betriebene Heizkomponente mit einer derartigen Mittelspannung bringt zudem deutlich geringere Kabeldurchmesser mit sich.

Weitere bevorzugte Merkmale und/oder Vorteile der Erfindung sind Gegenstand der nachfolgenden Beschreibung und der zeichnerischen Darstellung von Ausführungsbeispielen.

In den Figuren zeigen:
- Fig. 1: eine schematische Darstellung einer ersten Ausführungsform einer Behandlungsanlage;
- Fig. 2: eine schematische Darstellung einer zweiten Ausführungsform einer Behandlungsanlage;
- Fig. 3: eine schematische Darstellung einer dritten Ausführungsform einer Behandlungsanlage;
- Fig. 4: eine schematische Darstellung eines Normalbetriebs der Wärmespeicher- und Heizanlage;
- Fig. 5: eine schematische Darstellung einer Einspeicherung von Wärmeenergie in die Wärmespeichereinheiten der Wärmespeicher- und Heizanlage;
- Fig. 6: eine schematische Darstellung eines Vollastbetriebs der Wärmespeicher- und Heizanlage;
- Fig. 7: eine schematische Darstellung eines Spülvorgangs der Behandlungsanlage;
- Fig. 8: eine schematische Darstellung einer ersten Ausführungsform einer Behandlungsanlage für Materialbahnen mit Lösemittelrückgewinnung; und
- Fig. 9: eine schematische Darstellung einer zweiten Ausführungsform einer Behandlungsanlage für Materialbahnen mit Lösemittelrückgewinnung.

Gleiche oder funktional äquivalente Elemente sind in sämtlichen Figuren mit denselben Bezugszeichen versehen.

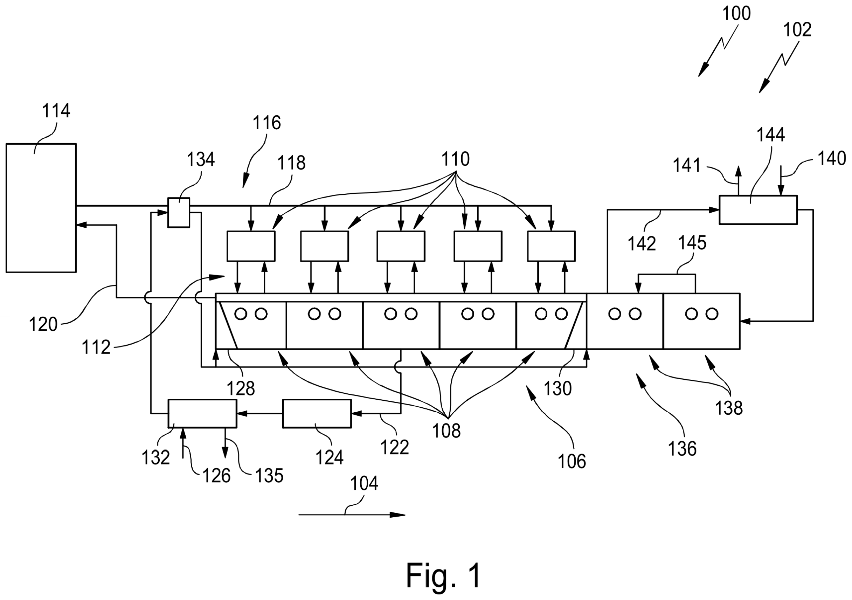

Eine in Fig. 1 schematisch dargestellte erste Ausführungsform einer als Ganzes mit 100 bezeichneten Behandlungsanlage dient der Behandlung von Werkstücken (nicht dargestellt).

Die Behandlungsanlage 100 ist beispielsweise eine Trocknungsanlage 102 zum Trocknen von Werkstücken.

Die Werkstücke sind beispielsweise Fahrzeugkarosserien.

Die Behandlungsanlage 100 dient vorzugsweise der Trocknung von zuvor lackierten oder anderweitig behandelten Fahrzeugkarosserien.

Die Werkstücke sind vorzugsweise mittels einer Fördervorrichtung (nicht dargestellt) der Behandlungsanlage 100 längs einer Förderrichtung 104 durch einen Behandlungsraum 106 der Behandlungsanlage 100 hindurchförderbar.

Der Behandlungsraum 106 umfasst mehrere, beispielsweise mindestens drei, vorzugsweise fünf, Behandlungsraumabschnitte 108 oder ist durch diese Behandlungsraumabschnitte 108 gebildet.

Jedem Behandlungsraumabschnitt 108 ist vorzugsweise ein separates Umluftmodul 110 zugeordnet.

Mittels eines jeden Umluftmoduls 110 ist vorzugsweise ein Gasstrom in einem Kreislauf, insbesondere einer Umluftführung 112, führbar und durch den jeweiligen Behandlungsraumabschnitt 108 hindurchführbar. Vorzugsweise bilden jeweils ein Umluftmodul 110 und jeweils ein Behandlungsraumabschnitt 108 eine Umluftführung 112.

Vorzugsweise umfasst jedes Umluftmodul 110 ein oder mehrere Gebläse zum Antreiben des im Kreislauf geführten Gasstroms.

Insbesondere kann vorgesehen sein, dass der in der Umluftführung 112 geführte Gasstrom durch Zuführung von Heizgas erhitzbar ist. Dieser Wärmeeintrag dient dann wiederum dazu, das zu behandelnde Werkstück zu erwärmen, insbesondere ein als Fahrzeugkarosserie ausgebildetes Werkstück 102 zu trocknen.

Die Behandlungsanlage 100 umfasst ferner eine Wärmespeicher- und Heizanlage 114, welche Heizgas zum Erhitzen des in der Umluftführung 112 geführten Gasstroms bereitstellt.

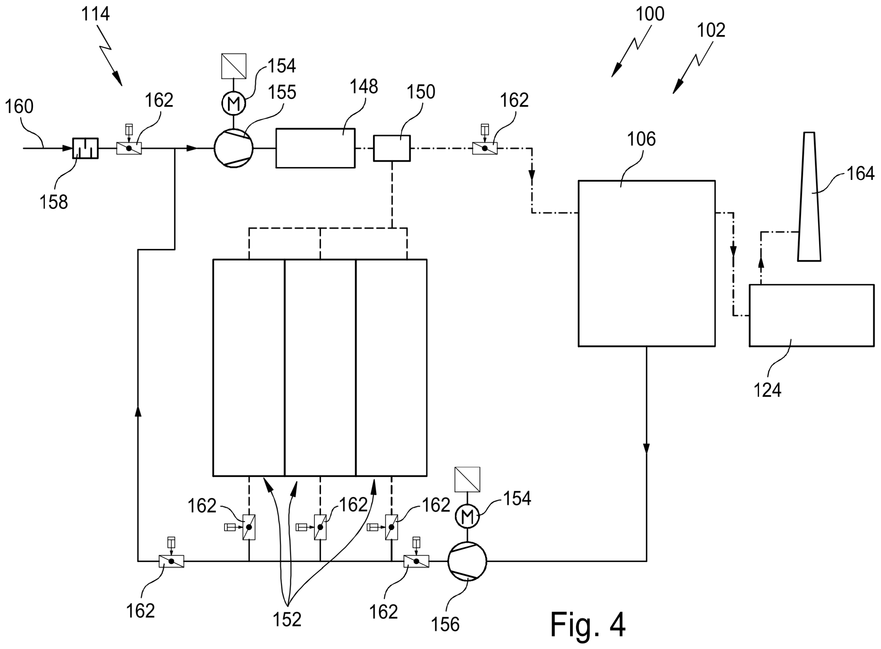

Der Aufbau und die Funktionsweise der Wärmespeicher- und Heizanlage 114 wird mit Bezug auf die Fig. 4 bis 7 weiter unten näher beschrieben.

In der in Fig. 1 dargestellten, ersten Ausführungsform umfasst die Behandlungsanlage 100 eine Heizgasführung 116, welche eine Heizgaszuführung 118 und eine Heizgasrückführung 120 umfasst.

Die Heizgaszuführung 118 führt in der Wärmespeicher- und Heizanlage 114 erhitztes Heizgas zu den Umluftmodulen 110.

Zumindest ein Teil des in den Behandlungsraumabschnitten 108 zirkulierten Gases wird über die Heizgasrückführung 120 zu der Wärmespeicher- und Heizanlage 114 zurückgeführt.

Ein Teil des in den Behandlungsraumabschnitten 108 zirkulierten Gases bzw. im Kreislauf zwischen den Behandlungsraumabschnitten 108 und den Umluftmodulen 110 im Kreislauf geführten Gases wird ferner vorzugsweise über eine Abgasführung 122 zu einer thermischen Abgasreinigungsanlage 124 der Behandlungsanlage 100 geführt.

In der thermischen Abgasreinigungsanlage 124 werden die Abgase, welche u.a. Lösemittel enthalten, zur Reinigung verbrannt.

Die in der thermischen Abgasreinigungsanlage 124 gereinigten Abgase werden als Abluft an die Umgebung abgegeben.

Die Behandlungsanlage 100 umfasst ferner vorzugsweise eine Frischluftluftzuführung 126, mit welcher Frischluft zu einer Einlassschleuse 128 und einer Auslassschleuse 130 des Behandlungsraums 106 geführt wird.

Im Pfad der Frischluftzuführung 126 sind ferner vorzugsweise ein erster Frischluftwärmeübertrager 132 und ein zweiter Frischluftwärmeübertrager 134 angeordnet, welche der zugeführten Frischluft Wärme übertragen, sodass eine Kondensatbildung in der Einlassschleuse 128 und/oder der Auslassschleuse 130 vermieden wird.

Der zweite Frischluftwärmeübertrager 134 dient vorzugsweise der Restaufheizung der Frischluft auf die erforderliche Prozesstemperatur in den Behandlungsraumabschnitten 108 und der Kompensation von Temperaturschwankungen, welche auf ein elektrisch betriebenes RTO-System zurückzuführen sind.

Der erste Frischluftwärmeübertrager 132 ist so zwischen der Frischluftzuführung 126 und der thermischen Abgasreinigungsanlage 124 angeordnet, dass die in der Abluft 135 der thermischen Abgasreinigungsanlage 124 enthaltene Wärme auf die zugeführte Frischluft übertragen wird.

Der zweite Frischluftwärmeübertrager 134 ist an der Heizgaszuführung 118 zwischen der Wärmespeicher- und Heizanlage 114 und den Umluftmodulen 110 angeordnet und überträgt ein Teil der Wärme des in der Heizgaszuführung 118 geführten Heizgases auf die Frischluft.

Die Behandlungsanlage 100 umfasst vorzugsweise weiter einen Nachbehandlungsraum 136, welcher mindestens einen, vorzugsweise zwei, Nachbehandlungsraumabschnitt 138 umfasst.

Der Nachbehandlungsraum 136 ist dem Behandlungsraum 106 bezogen auf die Förderrichtung 104 vorzugsweise nachgeordnet.

Die Nachbehandlungsraumabschnitte 138 werden über eine weitere Frischluftzuführung 140 mit Frischluft versorgt bzw. von dieser durchströmt.

In den Nachbehandlungsraumabschnitten 138 wird den in dem Behandlungsraum 106 getrockneten Werkstücken vorzugsweise keine zusätzliche Wärme zugeführt.

Dennoch geben die Werkstücke während der Nachbehandlung in den Nachbehandlungsraumabschnitten 138, d. h. vorzugsweise beim weiteren Trocknen, in dem Behandlungsraum 106 zugeführte Wärme ab.

Die Abluft 141 des Nachbehandlungsraums 136 wird über eine Abluftführung 142 so durch einen weiteren, dritten Frischluftwärmeübertrager 144 geführt, dass mindestens ein Teil der in der Abluft enthaltenen Wärme auf die zugeführte Frischluft der Frischluftzuführung 140 übertragen wird.

Die durch die Frischluftzuführung 140 zu den Nachbehandlungsraumabschnitten 138 geführte Frischluft wird vorzugsweise über mindestens eine Gasführung 145 von einem Nachbehandlungsraumabschnitt 108 zum nächsten weitergeführt.

Die Anordnung der Heizgasführung der in Fig. 1 gezeigten, ersten Ausführungsform ermöglicht eine direkte Heizgasführung von der Wärmespeicher- und Heizanlage 114 zu den Umluftmodul 110 und von den Behandlungsraumabschnitten 108 direkt zurück zur Wärmespeicher- und Heizanlage 114.

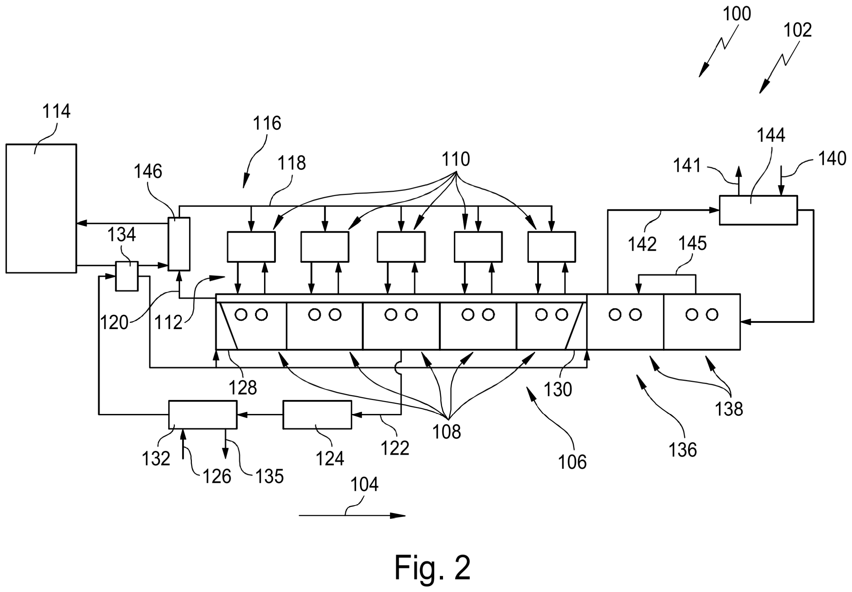

In der in Fig. 2 schematisch dargestellten, zweiten Ausführungsform der Behandlungsanlage 100 erfolgt das Erhitzen des in der Heizgasführung 118 geführten Heizgases indirekt über einen zentralen Wärmeübertrager 146, welcher die in der Wärmespeicher- und Heizanlage 114 erzeugte bzw. bereitgestellte Wärme auf das in der Heizgaszuführung 118 bzw. in der Heizgasrückführung 120 geführte Heizgas überträgt.

Somit ist der Gasstrom der Wärmespeicher- und Heizanlage 140 von dem Heizgasstrom in der Heizgasführung 116 fluidisch getrennt.

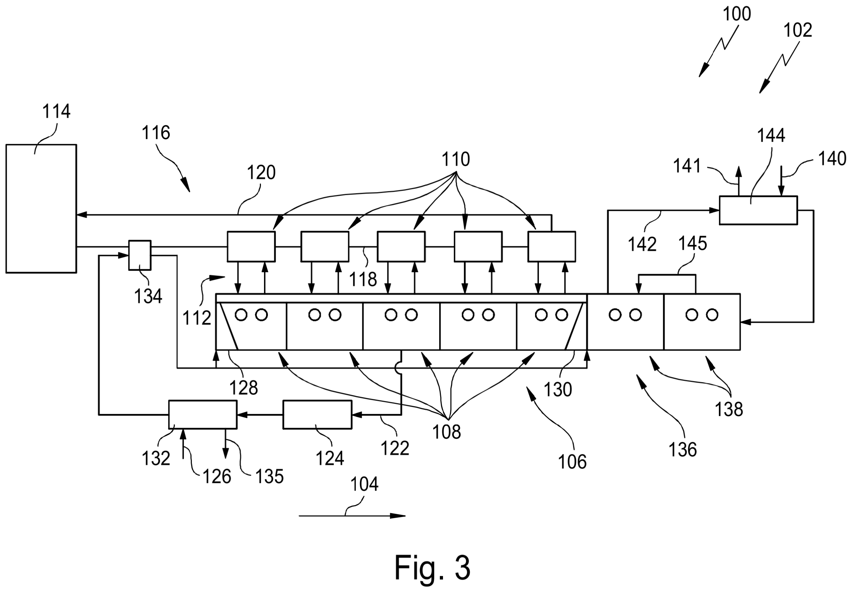

In Fig. 3 ist schematisch eine dritte Ausführungsform der Behandlungsanlage 100 dargestellt, in welcher die Umluftmodule 110 jeweils einen eigenen Wärmeübertrager (nicht dargestellt) aufweisen, welche thermisch mit der Heizgaszuführung 118 gekoppelt sind, d.h. Wärme des in der Heizgaszuführung 118 geführten Heizgases wird auf den in der Umluftführung 112 geführten Gasstrom übertragen.

Somit ist die Heizgasführung 116 der dritten Ausführungsform atmosphärisch von den Gasströmen zwischen Umluftmodulen 110 und den Behandlungsraumabschnitten 108 entkoppelt.

Insbesondere wird in der Heizgasführung 116 der dritten Ausführungsform Reingas, d.h. Gas ohne beispielsweise Lösemitteleinträge, geführt.

In den Fig. 4 bis 7 ist die Behandlungsanlage 100 schematisch so dargestellt, dass die verschiedenen Betriebsmodi bzw. Zustände der Wärmespeicher- und Heizanlage 114 ersichtlich sind, wobei die durchgezogenen Verbindungslinien eine Gasführung mit Kaltgas bzw. einem abgekühlten Gas repräsentieren, wohingegen die Strichpunkt-Verbindungen eine Gasführung mit Heizgas darstellen. Die gestrichelten Verbindungen symbolisieren, dass in dem jeweiligen Betriebsmodus durch diese Verbindungen kein Gas geführt wird.

Fig. 4 zeigt eine schematische Darstellung eines Normalbetriebs der Wärmespeicher- und Heizanlage 114.

Die Wärmespeicher- und Heizanlage 114 umfasst vorzugsweise eine elektrische Heizvorrichtung 148, eine Mischvorrichtung 150 und mindestens eine, vorzugsweise drei Wärmespeichereinheiten 152, welche zusammen einen Wärmespeicher bilden.

Die Wärmespeicher- und Heizanlage 114 umfasst ferner vorzugsweise einen ersten und einen zweiten von einem Motor 154 angetriebenen Gebläseverdichter 155, 156, welche den Gasstrom in der Wärmespeicher- und Heizanlage 114 fördern.

Des Weiteren umfasst die Wärmespeicher- und Heizanlage 114 vorzugsweise eine Schalldämpfereinheit 158, welche die Schallemission bei der Zuführung von Frischluft 160 in die Wärmespeicher- und Heizanlage 114 reduziert.

Daneben umfasst die Wärmespeicher- und Heizanlage 114 insbesondere mindestens ein, vorzugsweise sieben gesteuerte und/oder geregelte Ventile 162 zur Steuerung und/oder Regelung des Gasvolumenstroms in der Wärmespeicher- und Heizanlage 114.

Im Normalbetrieb wird der Wärmespeicher- und Heizanlage 114 Frischluft 160 zugeführt, welche eingangs die Schalldämpfereinheit 158 zur Schallemissionsreduzierung passiert.

Über ein Ventil 162, welches stromabwärts des Schalldämpfers 158 angeordnet ist und vorzugsweise kolbengesteuert und/oder -geregelt ist, wird der Volumenstrom der Frischluftzufuhr gesteuert und/oder geregelt.

Die zugeführte Frischluft wird mittels des ersten Gebläseverdichters 155 in Richtung der elektrischen Heizvorrichtung 148 gefördert, in welcher die zugeführte Frischluft erhitzt wird.

Stromabwärts der elektrischen Heizvorrichtung 148 ist die Mischvorrichtung 150 angeordnet, welche im Normalbetrieb das in der elektrischen Heizvorrichtung 148 erhitzte Gas, d. h. das Heizgas, entsprechend seiner Schaltstellung leitet.

Die Mischvorrichtung 150 weist vorzugsweise mindestens drei Schaltstellung auf.

Im ersten Schaltzustand wird das von der elektrischen Heizvorrichtung 148 zugeführte Heizgas ausschließlich in Richtung des stromabwärts der Mischvorrichtung 150 angeordneten Behandlungsraums 106 geleitet.

Im zweiten Schaltzustand wird das Heizgas ausschließlich in Richtung der Wärmespeichereinheiten 152 zur Einspeicherung der Wärmeenergie geleitet.

Und in der dritten Schaltstellung wird das von der elektrischen Heizvorrichtung 148 kommende Heizgas unter Zumischung der in den Wärmespeichereinheiten 152 gespeicherten Wärmeenergie in Richtung des Behandlungsraums 106 geleitet.

Im Normalbetrieb gemäß der Fig. 4 leitet die Mischvorrichtung 150 in ihrer ersten Schaltstellung das Heizgas durch ein stromabwärts angeordnetes Ventil 162 in Richtung des Behandlungsraums 106, wobei das Ventil 162 den Volumenstrom des Heizgases regelt und/oder steuert.

Somit wird im sogenannten Normalbetrieb kein Heizgas in die Wärmespeichereinheiten 152 zur Einspeicherung geleitet.

Ein Teil des im Behandlungsraum 106 zirkulierten Gases wird in die thermische Abgasreinigungsanlage 124 geleitet und von dieser als gereinigte Abluft über eine Abluftleitung 164 aus der Behandlungsanlage 100 herausgeführt.

In Abhängigkeit der eingesetzten Ausführungsform der in den Fig. 1 bis 3 dargestellten, drei Ausführungsformen der erfindungsgemäßen Behandlungsanlage 100 wird ein weiterer Teil des im Behandlungsraum 106 verwendeten Gases in die Wärmespeicher- und Heizanlage 114 zurückgeführt.

Bezogen auf die in Fig. 1 dargestellte, erste Ausführungsform wird dementsprechend abgekühltes Gas aus den Behandlungsraumabschnitten 108 direkt zurück in die Wärmespeicher- und Heizanlage 114 zurückgeführt, während bezogen auf die in den Fig. 2 und 3 dargestellte zweite und dritte Ausführungsform abgekühltes Reingas zurückgeführt wird.

Der zurückgeführte, abgekühlte Gasstrom wird dann mittels des zweiten Gebläseverdichters 156 zur erneuten Erhitzung in Richtung der elektrischen Heizvorrichtung 148 gefördert.

Stromabwärts des zweiten Gebläseverdichters 156 sind vorzugsweise zwei gesteuerte und/oder geregelte Ventile 162 angeordnet, welche den Volumenstrom in Richtung der elektrischen Heizvorrichtung 148 steuern und/oder regeln.

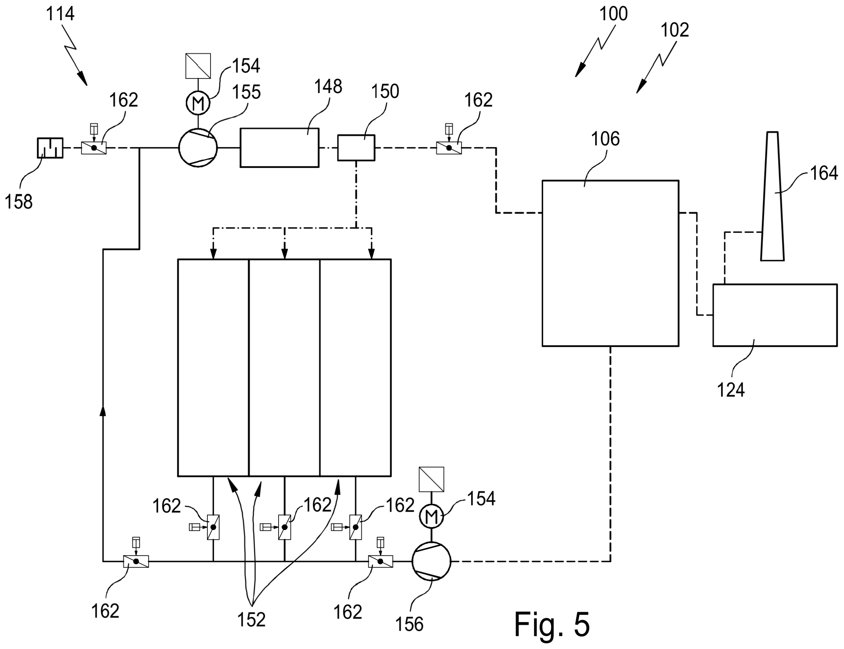

Fig. 5 zeigt eine schematische Darstellung einer Einspeicherung von Wärmeenergie in die Wärmespeichereinheiten 152 der Wärmespeicher- und Heizanlage 114.

Dargestellt ist eine parallele Einspeicherung in alle umfassten Wärmespeichereinheiten 152. Vorstellbar ist aber auch, dass nur einem oder nur einem Teil der Wärmespeichereinheiten 152 Wärmeenergie zugeführt, wofür zusätzliche Ventile zwischen der Mischvorrichtung 150 und den Wärmespeichereinheiten 152 vorgesehen sein können.

Während des Einspeichervorgangs sind die der jeweiligen Wärmespeichereinheit 152 zugeordneten Ventile 162, welche stromabwärts der jeweiligen Wärmespeichereinheiten 152 angeordnet sind, zumindest teilweise geöffnet, um vorzugsweise das von dem zugeführten Heizgas verdrängte, in den Wärmespeichereinheiten 152 enthaltene Restgas, welches vorzugsweise eine geringe Temperatur als das zugeführte Heizgas aufweist, in den Kreislauf der Wärmespeicher- und Heizanlage 114 strömen zu lassen.

Am Ende des Einspeicherns der Wärmeenergie werden die den Wärmespeichereinheiten 152 zugeordneten Ventile 162 geschlossen und die Mischvorrichtung 150 wird vorzugsweise in ihre erste Schaltstellung geschaltet.

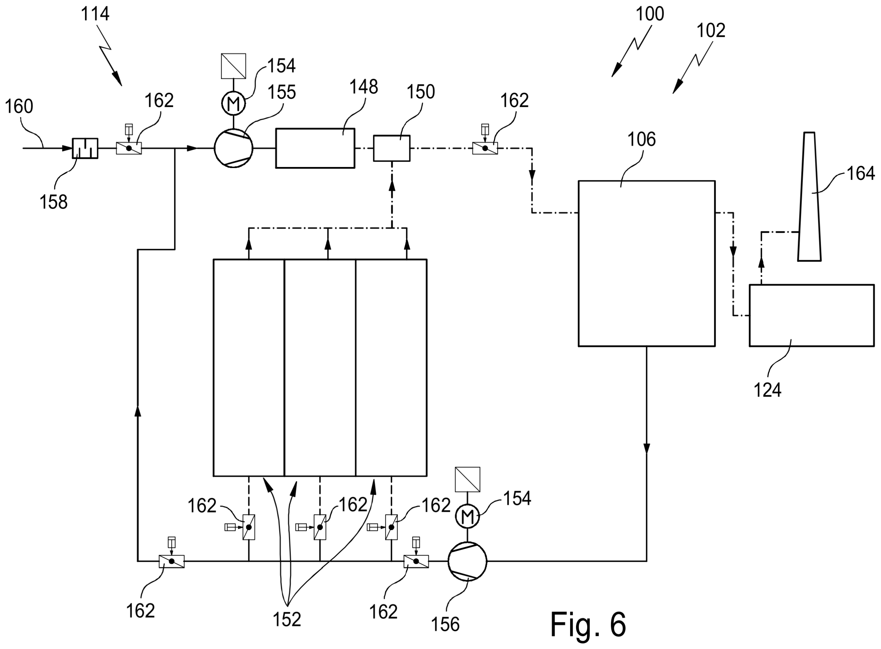

Fig. 6 zeigt eine schematische Darstellung eines Volllastbetriebs der Wärmespeicher- und Heizanlage 114.

Im Volllastbetrieb, in welchem es erforderlich ist, den Behandlungsraum 106 sehr kurzfristig auf die notwendige Betriebstemperatur zu bringen, ist die Mischvorrichtung 150 in ihre dritte Schaltstellung geschaltet, um dem in der elektrischen Heizvorrichtung 148 erhitzten Heizgas Wärmeenergie der in den Wärmespeichereinheiten 152 gespeicherten Wärme, vorzugsweise temporär, zuzumischen.

Vorzugsweise sobald die erforderliche Betriebstemperatur erreicht wurde, schaltet die Mischvorrichtung 150 zurück in ihre erste Schaltstellung, womit keine weitere Wärme aus den Wärmespeichereinheiten 152 ausgespeichert wird.

In etwaigen Stillstands- oder Pausenzeiten kann dann vorzugsweise wieder Wärmeenergie in die Wärmespeichereinheiten 152 eingespeichert werden, um diese für den Volllastbetrieb vorzuhalten.

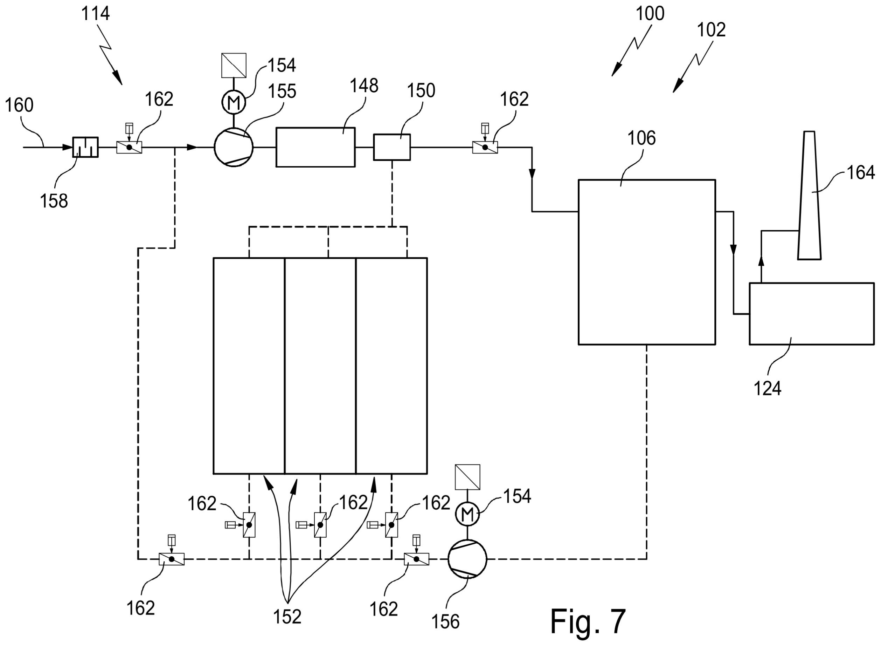

Fig. 7 zeigt eine schematische Darstellung eines Spülvorgangs der Behandlungsanlage 100.

Während des Spülvorgangs heizt die elektrische Heizvorrichtung 148 nicht, so dass die zugeführte Frischluft 160 durch die elektrische Heizvorrichtung 148, die Mischvorrichtung 150 sowie den Behandlungsraum 106 und die thermische Abgasreinigungsanlage 124 strömt, um die entsprechende Gasführung zu spülen.

Vorstellbar ist ferner, dass auch die Wärmespeichereinheiten 152 durch die Umschaltung des Mischvorrichtung 150 bei Bedarf gespült werden können.

Insbesondere soll es ferner möglich sein, dass das Spülgas in der thermischen Abgasreinigungsanlage 124 zur Reinigung verbrannt wird, bevor es über die Abluftleitung 164 aus der Behandlungsanlage herausgeführt wird.

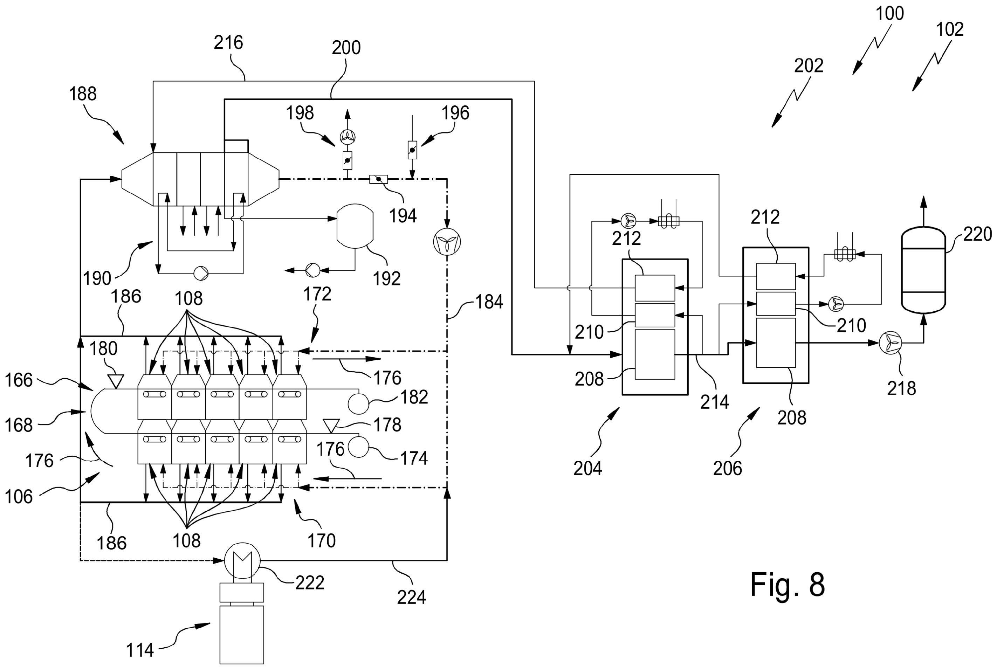

Fig. 8 zeigt eine schematische Darstellung einer ersten Ausführungsform einer Behandlungsanlage 100, insbesondere einer Trocknungsanlage 102, zum Behandeln von Materialbahnen 166, insbesondere von Batterieelektroden-Bahnen 168 für die Herstellung von Lithium-Ionen-Batterien.

Die Behandlungsanlage 100 weist ebenso einen Behandlungsraum 106 auf, welcher mehrere Behandlungsraumabschnitte 108 umfasst, wobei die Abschnitte 108 auf eine erste Gruppe 170 und eine zweite Gruppe 172 aufgeteilt sind.

Die in Fig. 8 dargestellte Ausführungsform zeigt eine sogenannte Tandembeschichtung, bei welcher die Materialbahn 166 zunächst von einer ersten Rolle 174 abgewickelt wird und entlang einer Förderrichtung 176 gefördert wird.

Mittels einer ersten Beschichtungsvorrichtung 178, vorzugsweise eine Schlitzdüse, wird die Materialbahn 166 auf einer Seite beschichtet und anschließend durch eine erste Gruppe 170 der Behandlungsraumabschnitte 108 geführt, wobei die Beschichtung der Materialbahn 166 in der ersten Gruppe 170 der Behandlungsraumabschnitte getrocknet wird.

Stromabwärts der ersten Gruppe 170 wird die Materialbahn 166 so umgelenkt, dass eine zweite Beschichtungsvorrichtung 180, vorzugsweise eine Schlitzdüse, die andere Seite der Materialbahn 166 beschichten kann.

Im Anschluss an den zweiten Beschichtungsvorgang wird die Materialbahn 166 durch die zweite Gruppe 172 von Behandlungsraumabschnitten 108 geführt, so dass auch die Beschichtung auf der anderen Seite der Materialbahn 166 getrocknet wird.

Abschließend wird die beidseitig beschichtete Materialbahn 166 auf eine zweite Rolle 182 aufgewickelt.

Dem Aufwickeln auf der zweiten Rolle 182 kann vorzugsweise noch ein Verfahrensschritt des Kalandrierens vorausgehen.

Vorstellbar ist auch eine Anordnung des Behandlungsraums 106 und der ersten und zweiten Beschichtungsvorrichtung 178, 180 derart, dass alle Behandlungsraumabschnitte 108 hintereinander in Förderrichtung 176 angeordnet sind und die Beschichtungsvorrichtungen 178, 180 stromaufwärts des Behandlungsraums 106 so angeordnet sind, dass beide Seiten der Materialbahn 166 gleichzeitig beschichtet werden können.

Den Behandlungsraumabschnitten 108 wird für die Trocknung ein Umluftstrom über eine Umluftzuführung 184 zugeführt.

Wohingegen die lösemittelhaltige Abluft über eine Abluftführung 186 aus den Behandlungsraumabschnitten 108 abgeführt wird.

Im Zuge der Elektrodenbeschichtung wird ein Elektrodenmaterial auf die Materialbahn 166 aufgetragen bzw. aufgebracht, welches eine Lithiumverbindung, ein Bindemittel und ein Lösemittel umfasst, wobei das Lösemittel beispielsweise N-Methyl-2-pyrrolidon (NMP) ist. Durch den Beschichtungs- und Trocknungsvorgang liegt NMP gasförmig vor und ist in der Umluft in den Behandlungsraumabschnitten 108 enthalten.

Ein Teil der abgeführten Abluft wird einer Lösemittelrückgewinnungsvorrichtung 188 zugeführt, in welche eine Wärmerückgewinnungseinrichtung 190 integriert ist.

In der Lösemittelrückgewinnungsvorrichtung 188 wird die lösemittelhaltige Abluft in einer oder mehreren Stufen heruntergekühlt und das kondensierte NMP in einem Behälter 192 aufgefangen.

Das kondensierte NMP kann im Anschluss beispielsweise aufbereitet und in einem Speicherbehälter für weitere Beschichtungsvorgänge vorgehalten werden.

Die am Ende der Lösemittelrückgewinnungsvorrichtung 188 verfügbare und lösemittelreduzierte Luft wird zum Teil über die Umluftzuführung 184 wieder den Behandlungsraumabschnitten 108 zugeführt, wobei die Zuführung bzw. der Volumenstrom über die Regelung der Luftmenge zur Abluftreinigungsanlage 202 einstellbar ist.

Der Umluftzuführung kann zudem über eine einstellbare Frischluftzuführung 196 Frischluft zugemischt werden. Hierdurch ist beispielsweise ein Spülen der gesamten Behandlungsraumabschnitte 108 möglich.

Ferner kann an der Umluftzuführung eine einstellbare Notabsaugung 198 vorgesehen sein, um bei Bedarf Umluft aus der Umluftzuführung 184 abzuleiten.

Vorzugsweise im Bereich der letzten Stufe der Lösemittelrückgewinnungsanlage 188 wird ferner ein weiterer Teil der lösemittelreduzierten Luft aus der Lösemittelrückgewinnungsvorrichtung 188 über eine Bypassführung 200 einer Abgasreinigungsanlage 202 mit einer ersten Reinigungsstufe 204 und einer möglichen zweiten Reinigungsstufe 206 zugeführt. Die Bypassführung ist insbesondere eine Seitenstromführung. Eine oder mehrere Reinigungsstufen umfassen insbesondere eine ein- der zweistufige Aufkonzentrierung, wobei optional ein Aktivkohlefilter zur weitergehenden Reinigung vorgesehen sein kann.

Jede der beiden Reinigungsstufen 204, 206 umfasst einen Adsorptionsbereich 208, einen Kühlbereich 210 und einen Desorptionsbereich 212.

Die in der ersten Reinigungsstufe 204 im zugehörigen Adsorptionsbereich 208 adsorbierte Luft 214 wird zum einen den Kühlungsbereichen 210 der ersten und der zweiten Reinigungsstufe 204, 206 zugeführt und von dort aus weiter jeweils den Desorptionsbereichen 212.

Zum anderen wird diese adsorbierte Luft 214 dem Adsorptionsbereich 208 der zweiten Reinigungsstufe 206 zugeführt, durchströmt diesen und wird über einen Ventilator 218 einer Luftfiltervorrichtung 220 zugeführt, von wo aus die Luft gefiltert an die Atmosphäre abgeführt wird.

Die den Desorptionsbereich 212 der ersten Reinigungsstufe 204 durchströmende Luft wird als konzentrierte Luft 216 zu der Lösemittelrückgewinnungsvorrichtung 188 zurückgeführt und dort der lösemittelhaltigen Abluft des Behandlungsraums 106 zugemischt.

Die den Desorptionsbereich 212 der zweiten Reinigungsstufe 206 durchströmende Luft wird hingegen der Bypassführung 200 zugeleitet und durchströmt somit die Abgasreinigungsanlage 202 erneut.

Im Falle einer einstufigen Abgasreinigungsanlage 202 wird entspricht die einzige Reinigungsstufe funktional und strukturell vorzugsweise der ersten Reinigungsstufe 204.

Die Abluftführung 186, welche einen Teil der aus den Behandlungsraumabschnitten 108 abgeführten Umluft der Lösemittelrückgewinnungsvorrichtung 188 zuführt, ist derart stromabwärts des Behandlungsraums 106 verzweigt, dass der andere Teil einem zentralen Wärmeübertrager 222 zugeführt, über welchen Wärmeenergie einer wie zuvor beschriebenen Wärmespeicher- und Heizanlage 114 auf die Abluft übertragen wird.

Die aufgeheizte Abluft wird über eine Heizgaszuführung 224 in die Umluftführung 184 geleitet und somit der Umluft für die Behandlungsraumabschnitte 108 zugemischt.

Somit kann die Wärmespeicher- und Heizanlage 114 auch im Rahmen einer Trocknungsanlage 102 für Batterieelektroden-Bahnen 168 eingesetzt werden, um ausreichend Wärmeenergie für den Trocknungsvorgang im Behandlungsraum 106 bereitzustellen.

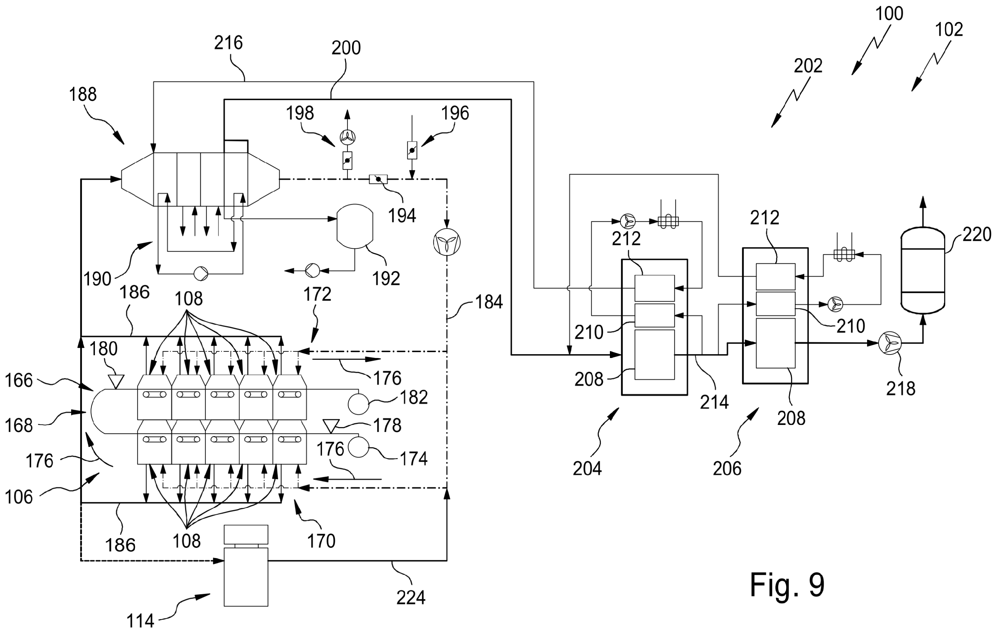

In Fig. 9 ist eine zweite Ausführungsform einer Behandlungsanlage 100 für Materialbahnen 166 dargestellt, welche sich hinsichtlich der in Fig. 8 dargestellten ersten Ausführungsform dahingehend unterscheidet, dass der Wärmespeicher- und Heizanlage 114 kein zentraler Wärmeübertrager zur atmosphärischen Entkopplung vorgelagert ist, sondern die aus den Behandlungsraumabschnitten 108 abgeführte Abluft direkt in die Wärmespeicher- und Heizanlage 114 geführt wird, um dort aufgeheizt und/oder eingespeichert bzw. ausgespeichert zu werden.

### Bezugszeichenliste

- 100: Behandlungsanlage
- 102: Trocknungsanlage
- 104: Förderrichtung
- 106: Behandlungsraum
- 108: Behandlungsraumabschnitte
- 110: Umluftmodul
- 112: Umluftführung
- 114: Wärmespeicher- und Heizanlage
- 116: Heizgasführung
- 118: Heizgaszuführung
- 120: Heizrückführung
- 122: Abgasführung
- 124: thermische Abgasreinigungsanlage
- 126: Frischluftzuführung
- 128: Einlassschleuse
- 130: Auslassschleuse
- 132: erster Frischluftwärmeübertrager
- 134: zweiter Frischluftwärmeübertrager
- 135: Abluft
- 136: Nachbehandlungsraum
- 138: Nachbehandlungsraumabschnitte
- 140: Frischluftzuführung des Nachbehandlungsraums
- 141: Abluft des Nachbehandlungsraums
- 142: Abluftführung
- 144: dritter Frischluftwärmeübertrager
- 146: zentraler Wärmeüberträger
- 148: elektrische Heizvorrichtung
- 150: Mischvorrichtung
- 152: Wärmespeichereinheit
- 154: Motor für Gebläseverdichter
- 155: erster Gebläseverdichter
- 156: zweiter Gebläseverdichter
- 158: Schalldämpfereinheit
- 160: Frischluft
- 162: gesteuertes und/oder geregeltes Ventil
- 164: Abluftleitung
- 166: Materialbahn
- 168: Batterieelektroden-Bahn
- 170: erste Gruppe von Behandlungsraumabschnitten
- 172: zweite Gruppe von Behandlungsraumabschnitten
- 174: erste Rolle
- 176: Förderrichtung
- 178: erste Beschichtungsvorrichtung
- 180: zweite Beschichtungsvorrichtung
- 182: zweite Rolle
- 184: Umluftzuführung
- 186: Abluftführung
- 188: Lösemittelrückgewinnungsvorrichtung
- 190: Wärmerückgewinnungseinrichtung
- 192: Behälter
- 194: Drossel
- 196: Frischluftzuführung
- 198: Notabsaugung
- 200: Bypassführung
- 202: Abgasreinigungsanlage
- 204: erste Reinigungsstufe
- 206: zweite Reinigungsstufe
- 208: Adsorptionsbereich
- 210: Kühlbereich
- 212: Desorptionsbereich
- 214: adsorbierte Luft
- 216: konzentrierte Luft
- 218: Ventilator
- 220: Luftfiltervorrichtung
- 222: zentraler Wärmeübertrager
- 224: Heizgaszuführung

## Patentansprüche

1. Behandlungsanlage (100) zum Behandeln von Materialbahnen (166), insbesondere eine Trocknungsanlage (102) für Batterieelektroden-Bahnen (168), umfassend:
- einen Behandlungsraum (106), welcher mehrere Behandlungsraumabschnitte (108) umfasst, wobei vorzugsweise die Behandlungsraumabschnitte (108) auf eine erste Gruppe (170) und eine zweite Gruppe (172) aufgeteilt sind;
- eine Umluftzuführung (184) zur Zuführung eines Umluftstromes zu den Behandlungsraumabschnitten (108);
- eine Abluftführung (186) zur Abführung lösemittelhaltiger Abluft aus den Behandlungsraumabschnitten (108);
- eine Lösemittelrückgewinnungsvorrichtung (188), welcher ein Teil der lösemittelhaltigen Abluft zur Lösemittelrückgewinnung zuführbar ist, wobei lösemittelreduzierte Luft stromabwärts der Lösemittelrückgewinnungsvorrichtung (188) der Umluftzuführung (184) zuführbar ist; und
- eine Wärmespeicher- und Heizanlage (114) zum Speichern und Bereitstellen von Wärme,
wobei
a) die Wärmespeicher- und Heizanlage (114) Wärme über einen zentralen Wärmeübertrager (222), welcher zur atmosphärischen Entkopplung des Behandlungsraums (106) von der Wärmespeicher- und Heizanlage (114) vorgesehen ist, auf einen anderen Teil der lösemittelhaltigen Abluft überträgt und aufgeheizte Abluft stromabwärts des zentralen Wärmeübertragers (222) über eine Heizgasführung (224) der Umluftzuführung (184) zuführbar ist, oder
b) ein anderer Teil der lösemittelhaltigen Abluft direkt der Wärmespeicher- und Heizanlage (114) zuführbar ist und aufgeheizte Abluft stromabwärts der Wärmespeicher- und Heizanlage (114) über eine Heizgasführung (224) der Umluftzuführung (184) zuführbar ist.

2. Behandlungsanlage (100) nach Anspruch 1, **dadurch gekennzeichnet, dass** die Wärmespeicher- und Heizanlage (114) mindestens eine elektrische Heizvorrichtung (148) zum Heizen eines Heizgases, mindestens eine Mischvorrichtung (150) und mindestens eine Wärmespeichereinheit (152) umfasst.

3. Behandlungsanlage (100) nach Anspruch 2, **dadurch gekennzeichnet, dass** die Mischvorrichtung (150) stromabwärts der elektrischen Heizvorrichtung (148) angeordnet ist.

4. Behandlungsanlage (100) nach Anspruch 2 oder 3, **dadurch gekennzeichnet, dass** die Mischvorrichtung (150) mit der mindestens einen Wärmespeichereinheit (152) verbunden ist.

5. Behandlungsanlage (100) nach einem der Ansprüche 2 bis 4, **dadurch gekennzeichnet, dass** die Mischvorrichtung (150) so eingerichtet ist, dass in der elektrischen Heizvorrichtung (148) erhitztes Heizgas
- dem Behandlungsraum (106), insbesondere über die Heizgasführung (224) der Umluftzuführung (184), zuführbar ist, oder
- dem mindestens einen Wärmespeicher, insbesondere der mindestens einen Wärmespeichereinheit (152), zur Speicherung mindestens eines Teils der in dem Heizgas enthaltenen Wärme zuführbar ist, oder
- dem Behandlungsraum (106), insbesondere über die Heizgasführung (224) der Umluftzuführung (184), unter Zumischung mindestens eines Teils der in dem mindestens einen Wärmespeicher, insbesondere der mindestens einen Wärmespeichereinheit (152), gespeicherten Wärme zuführbar ist.

6. Behandlungsanlage (100) nach einem der Ansprüche 2 bis 5, **dadurch gekennzeichnet, dass** stromaufwärts der elektrischen Heizeinrichtung (148) ein Verdichter (155) angeordnet ist, wobei optional vorgesehen ist, dass stromabwärts des Behandlungsraums (106) ein weiterer Verdichter (156) angeordnet ist, mittels welchem rückgeführte Abluft in Richtung der elektrischen Heizvorrichtung (148) förderbar ist.

7. Behandlungsanlage (100) nach einem der Ansprüche 2 bis 6, **dadurch gekennzeichnet, dass** stromabwärts der Mischvorrichtung (150) ein steuer- oder regelbares Ventil (162) angeordnet ist.

8. Behandlungsanlage (100) nach einem der Ansprüche 1 bis 7, **dadurch gekennzeichnet, dass** der Umluftzuführung (184) über eine einstellbare Frischluftzuführung (196) Frischluft zum Spülen der Behandlungsraumabschnitte (108) zumischbar ist, wobei vorzugsweise an der Umluftzuführung (184) eine einstellbare Notabsaugung (198) vorgesehen ist, um bei Bedarf Umluft aus der Umluftzuführung (184) abzuleiten.

9. Behandlungsanlage (100) nach einem der Ansprüche 1 bis 8, **dadurch gekennzeichnet, dass** die Behandlungsraumabschnitte (108) entlang einer Förderrichtung (176) der Materialbahn (166) angeordnet sind, wobei eine erste Beschichtungsvorrichtung (178) stromaufwärts der ersten Gruppe (170) der Behandlungsraumabschnitte (108) angeordnet ist und eine zweite Beschichtungsvorrichtung (180) stromabwärts der ersten Gruppe (170) und stromaufwärts der zweiten Gruppe (172) der Behandlungsraumabschnitte (108) angeordnet ist.

10. Behandlungsanlage (100) nach einem der Ansprüche 1 bis 9, **dadurch gekennzeichnet, dass** die behandelte Materialbahn (166) stromabwärts der Behandlungsraumabschnitte (108) auf eine zweite Rolle (182) aufwickelbar ist, wobei dem Aufwickeln auf die zweite Rolle (182) vorzugsweise ein Verfahrensschritt des Kalandrierens vorausgeht.

11. Behandlungsanlage (100) nach einem der Ansprüche 1 bis 10, **dadurch gekennzeichnet durch** ein weiterer Teil der lösemittelreduzierten Luft aus der Lösemittelrückgewinnungsvorrichtung (188) über eine als Seitenstromführung ausgebildete Bypassführung (200) einer Abgasreinigungsanlage (202) mit mindestens einer Reinigungsstufe (204, 206) zur Aufkonzentrierung zuführbar ist.

12. Behandlungsanlage (100) nach Anspruch 11, **dadurch gekennzeichnet, dass** in der Lösemittelrückgewinnungsvorrichtung (188) die lösemittelhaltige Abluft zur Kondensation von Lösemittel, insbesondere N-Methyl-2-pyrrolidon (NMP), in einer oder mehreren Stufen abkühlbar und in einem Behälter (192) auffangbar ist, und die Abgasreinigungsanlage (202) mindestens eine Reinigungsstufe (204, 206) mit einem Adsorptionsbereich (208), einem Kühlbereich (210) und einem Desorptionsbereich (212) umfasst.

13. Verfahren zum Behandeln von Materialbahnen (166), insbesondere Batterieelektroden-Bahnen (168), in einer Behandlungsanlage (100), insbesondere nach einem der Ansprüche 1 bis 12, umfassend:
- Zuführen eines Umluftstromes zu mehreren Behandlungsraumabschnitten (108) eines Behandlungsraums (106) über eine Umluftzuführung (184);
- Abführen lösemittelhaltiger Abluft aus den Behandlungsraumabschnitten (108) über eine Abluftführung (186);
- Zuführen eines Teils der lösemittelhaltigen Abluft zu einer Lösemittelrückgewinnungsvorrichtung (188) zur Lösemittelrückgewinnung und Zuführen von lösemittelreduzierter Luft stromabwärts der Lösemittelrückgewinnungsvorrichtung (188) zu der Umluftzuführung (184); und
- Erwärmen der Behandlungsraumabschnitte (108) mittels einer Wärmespeicher- und Heizanlage (114),
wobei
a) die Wärmespeicher- und Heizanlage (114) Wärme über einen zentralen Wärmeübertrager (222) zur atmosphärischen Entkopplung auf einen anderen Teil der lösemittelhaltigen Abluft überträgt und aufgeheizte Abluft stromabwärts des zentralen Wärmeübertragers (222) über eine Heizgasführung (224) der Umluftzuführung (184) zugeführt wird, oder
b) ein anderer Teil der lösemittelhaltigen Abluft direkt der Wärmespeicher- und Heizanlage (114) zugeführt wird und aufgeheizte Abluft stromabwärts der Wärmespeicher- und Heizanlage (114) über eine Heizgasführung (224) der Umluftzuführung (184) zugeführt wird.

14. Verfahren nach Anspruch 13, **dadurch gekennzeichnet, dass** dem Heizgasstrom Wärme von einer elektrischen Heizvorrichtung (148) der Wärmespeicher- und Heizanlage (114) oder Wärme von der elektrischen Heizvorrichtung (148) und mindestens einer Wärmespeichereinheit (152) der Wärmespeicher- und Heizanlage (114) zugeführt wird,
wobei optional vorgesehen ist, dass
a) von der elektrischen Heizvorrichtung (148) der Wärmespeicher- und Heizanlage (114) erzeugte Wärme in die mindestens eine Wärmespeichereinheit (152) der Wärmespeicher- und Heizanlage (114) zu Zeiten geringer Strompreise eingespeichert wird; und/oder
b) von der mindestens einen Wärmespeichereinheit (152) der Wärmespeicher- und Heizanlage (114) eingespeicherte Wärme zu Zeiten hoher Strompreise ausgespeichert und dem Heizgasstrom zugeführt wird.

15. Verfahren nach Anspruch 14, **dadurch gekennzeichnet, dass**
a) in Phasen erhöhten Wärmebedarfs im Behandlungsraum (106) der Behandlungsanlage (100) in der mindestens einen Wärmespeichereinheit (152) der Wärmespeicher- und Heizanlage (114) eingespeicherte Wärme ausgespeichert und dem Heizgasstrom zugeführt wird; und/oder
b) in Phasen geringen Wärmebedarfs im Behandlungsraum (106) der Behandlungsanlage (100) von der elektrischen Heizvorrichtung (148) der Wärmespeicher- und Heizanlage (114) erzeugte Wärme in die mindestens eine Wärmespeichereinheit (152) der Wärmespeicher- und Heizanlage (114) eingespeichert wird.
